# EUROPEAN PATENT APPLICATION

(11) **EP 4 635 290 A1**
(43) Date of publication of application: **22.10.2025**
(21) Application number: 24170630.8
(22) Date of filing: 16.04.2024
(51) Int. Cl.: A01F 15/08

(54) **A METHOD OF FORMING A BALE BY A BALER, AN AGRICULTURAL SYSTEM, AND A BALER**

(71) Applicant: Kverneland Group Ravenna S.r.l., 48026 Russi (RA) (IT); Kverneland Group Mechatronics BV, 2153 LR Nieuw-Vennep (NL)
(72) Inventor: TJALMA, Indra, 8313 AW Rutten (NL); FRASCELLA, Cosimo, 48022 Lugo (Ravenna) (IT); ZANIBONI, Riccardo, 48122 Ravenna (IT)
(74) Representative: Conti, Marco

(57) **Abstract**

A method of forming a bale by a baler (2) towed by a tractor (3), wherein the baler has a pick-up unit (201) movable between a lowered position, and a raised position, wherein the tractor is mechanically connected to the baler and transmits mechanical power to the baler through a PTO shaft. A bidirectional exchange of control data between a control unit of the baler (2) and the tractor is established. The method comprises the following steps: assessing whether the pick-up unit is in the raised position, by the control unit of the baler; if the raised position of the pick-up unit is assessed, reducing a rotational speed of the PTO shaft.

## Description

This invention relates to a method of forming a bale by a baler, an agricultural system and a baler.

Balers, or hay balers, are machines that gather and compress previously cut agricultural products such as rice straw, grass, wheat, maize, and the like (hereinafter referred to as "hay or crop") from the ground, form a bale out of the hay and discharge it onto the field. Balers can be connected to a rear part of a machine, such as a tractor, which is driven by an operator. Bales may have a squared or a round shape; here, we focus mainly on round balers, that is, balers configured for forming round bales. Examples of balers are provided in patent documents EP3123858B1 or EP3664596B1, the latter being in the name of the Applicant. Typically, balers have a pick-up unit at their front end to pick up the hay from the ground, a compression chamber to form the bale and a rotor apparatus to feed the hay picked-up from the ground into the compression chamber of the baler.

After being collected (and optionally pressed and cut up by means of a further rotor, or other similar device), the material is rearranged on a central supply channel by the action of screw feeders. From this channel, the material is finally transferred toward a chamber in which the bale is formed, typically (but not exclusively) with a circular shape.

In particular, the pick-up unit is movable between a lowered position, where the pick-up unit is placed on the ground (via its wheels) and rotates to pick up hay from the ground and feeds it to the compression chamber, and a raised position, in which the pick-up unit is raised with respect to the ground and no longer picks up the hay.

In the examples described in the patent documents mentioned above, the baler is towed by a tractor; this is a typical situation. Alternatively, examples are known (for example form patent document WO2020/234840A1 by the same Applicant) of self-propelled vehicles which include balers (that is, self-propelled balers). In any case, the baler has parts that move during the operation of the baler; these parts typically receive mechanical power from a power-take off (PTO).

When the baler is towed by a tractor (this is the most common situation), the baler receives power from a rotatable power-take off (PTO) shaft of the tractor by which it is towed. Indeed, such power is used for providing mechanical power for operating internal parts of the baler.

Systems are known, for example by patent document US2022408632A1, wherein the baler and the tractor can exchange data through a communication protocol. In US2022408632A1, the communication between the baler and the tractor is used to manage the situation where a plug is formed in the channel that feeds grass from the pick-up to the baling chamber. However, the formation of plugs is only one of the issues that may arise in the baling process.

One problem that the farmers wish to avoid is bale milling of brittle crop, since such a phenomenon may reduce efficiency and productivity of a baler and can even lead to the generation of fire in the baler, thus providing a safety issue.

It is known that chamber of balers can have a fixed diameter (fixed-size) or variable diameter. In fixed-size chambers a plurality of rotating rollers is provided which delimit the compression chamber. In variable chambers a belt system is provided which includes one or more elongated elastomeric belts which are adapted for rolling engagement with tensioner rollers.

In particular, in the latter type of baler, one or more belts are placed side by side in the internal volume of the baler and wound around the rotating rollers so to define an endless loop which is flexible for delimiting the compression chamber. The rotatable rollers drive the belts around the loop, and the belts are deformed as the bale is being formed inside the compression chamber.

During bale formation the tractor is driven along windrows previously formed in the field. On headland turns, windrows are usually interrupted, and no crop is collected from the field. For this reason, is common for a farmer to raise the baler pick-up and to keep it raised until the turn is completed to prevent it from contacting ground or obstacles. During these operations, pressing chamber belts keep on rotating at normal working speed, but the bale is not growing because no new crop is collected by the baler. In this circumstance, the hay which is present in the compression chamber could create high friction with said belts. Despite such friction, however, the PTO shaft does not stop and thus the brittle crop (basically the crop (or the hay) inside the baling chamber, in particular, the one which is not included in the bale formed inside the chamber) in the compression chamber in contact with belts can get grinded (this phenomenon is known as bale milling) and falls within the belt(s). This is inefficient and results in yield reduction and/or in damage to the crop.

This reduction occurs because the material that falls between the belt(s) is not included in the final bale and is typically considered waste. The extent of yield loss can vary depending on factors such as the type of crop being baled, the efficiency of the baler, and the operator's skill in managing the baling process. In some cases, especially with certain types of crop material that tend to be more prone to fragmentation or shredding, the yield loss from material falling between the belts can be significant.

Another consequence of the friction is the increasing of temperature between belts and bale. The heat generated, combined with the dry and brittle nature of the crop material, creates conditions conducive to spontaneous combustion. It is to be mentioned that such a problem could be faced also in fixed chamber balers where no belt is present in the compression chamber; since also in this case the brittle crop still rotates inside the compression chamber (since PTO shaft keeps rotating and providing power to the baler) after the balling process is over and may cause bale milling inside the compression chamber and destroy the bale.

Hence, it is desired to provide a bale forming method and a baler with enhanced efficiency and productivity.

Scope of the present invention is to provide a method of forming a bale by a baler, an agricultural system and a baler which allow to obtain a baler and a method for forming a bale with enhanced efficiency and safety.

This scope is achieved by the method and the system according to the appended claims.

According to an aspect of the present description, the present invention provides a method for/of forming a bale by a baler. The baler is towed by a tractor. The baler has a pick-up unit. The pick-up unit is movable between a lowered position and a raised position. In the lowered position the pick-up unit picks up hay from the ground and feeds it into a compression chamber of the baler. In the raised position the pick-up unit is spaced apart from the ground and no longer picks up the hay. Please note that preferably, the pick-up unit is moved between the raised and the lowered positions by a hydraulic actuator. Indeed, in this case the raised and the lowered positions are defined as follows:
By "raised position" we refer to a condition in which oil is fed to the chamber of the hydraulic cylinder and the piston is moved along the full length of the cylinder (travels along the entire stroke of the cylinder) and the rod, connected to the piston, is fully extended. By "oil" we refer to hydraulic fluid, or medium, or oil that is used in hydraulic systems to actuate, or operate, hydraulic components such as cylinders, motors, valves, and pumps. Actuating oil serves as the medium through which hydraulic power is transmitted within the system to generate mechanical force or motion. Please note that in the present description oil and actuating oil are used interchangeably.

By "lowered position" we refer to a condition in which the oil is drained from the chamber of the hydraulic cylinder and the piston moves along the full length of the cylinder (travels along the entire stroke of the cylinder) in the opposite direction with respect to the direction along which the piston moves to be in the raised position, so that the pick-up unit is lowered due to gravity and is placed on the ground through the wheels of the pick-up unit.

The tractor is mechanically connected to the baler and transmits mechanical power to the baler through a PTO shaft. Moreover, a bidirectional exchange of control data between a control unit of the baler and the tractor is established. The method comprises a step of assessing whether the pick-up unit is in the raised position. The step of assessing whether the pick-up unit is in the raised position is carried out by the control unit of the baler.

The method includes a step of, if the raised position of the pick-up unit is assessed, reducing a rotational speed of the PTO shaft.

Hence, according to one aspect of the present description, the control unit of the baler assesses if the pick-up unit is in the raised position and as a result of such an assessment, the rotational speed of the PTO shaft is reduced.

Reduction of the rotational speed of PTO when the pick-up unit is lifted avoids the problem of bale milling and thus enhances the efficiency of the process, because when the pick-up unit is in the raised position, baling is not in progress, but the PTO shaft is still engaged with the baler and is still rotating, hence, the bale still rotates inside the compression chamber, while no hay is being picked up from the ground and is fed to the compression chamber; therefore, by reducing the rotational speed of the PTO shaft the rotational speed of the compression chamber is reduced and bale milling is avoided.

The method may include a step of receiving, at the control unit of the baler, position data. The position data is representative of the raised position of the pick-up unit. The method may include a step of assessing whether the pick-up unit is in the raised position based on said position data. In one example, the position data is acquired at the tractor or at the compression chamber.

Therefore, it is possible to assess the position of the pickup unit, using the data which is normally acquired during the normal function of baler, and not (necessarily) using dedicated sensors, which are traditionally used to detect the position of the pick-up.

Such a solution is particularly simple, reliable, safe, and cost-effective.

In one example, the position data is acquired at the tractor. The pick-up unit may be moved between the raised position and the lowered position through commands which are sent through the tractor. The baler receives at its control unit control data representative of said commands and assesses whether the pick-up unit is in the raised position based on said control data.

In one example, the pick-up unit is moved between the raised and the lowered position though a hydraulic actuator and a switching control valve, such as an auxiliary valve. The switching valve has an oil feed configuration, where actuating oil is fed into the hydraulic actuator, and an oil drain configuration, where the actuating oil is drained from the hydraulic actuator. In one example, the control data is representative of the configuration of the switching valve.

Hence, according to one example, it is possible to assess the position of the pick-up unit to verify if it is in the raised position, based on the commands which are received by the tractor and are communicated to the control unit of the baler (for example the configuration of the switching control valve).

In one example, the configuration of the switching control valve can be regulated through a lever. The lever is positioned at the tractor. The switching control valve is in the oil configuration when the lever is in a first position. The switching control valve is in the oil drain configuration when the lever is in a second position, different than the first position. The switching control valve further has a float configuration. In the float configuration the actuating oil can be flown back and forth in the cylinders.

In particular in the float configuration, oil can flow freely through the hydraulic circuit. This generally shall lead to a lowering of the pick-up unit due to the gravity. The switching control valve is in the float configuration when the lever is in a float position. In on example, the position of the pick-up is assessed as raised when the lever is in the first position for 200-300 ms. Moreover, the position of the pick-up may be assessed as lowered when lever is in the second position for at least 100 ms.

Moreover, the position of the pick-up may be assessed as lowered when the lever is in the float position.

Please note that one or more of the above-mentioned criteria may be used to assess the position of the pick-up unit.

In another example, the position data is acquired at the compression chamber. In this example. The position data represents the bale growth inside the compression chamber. The position of the pick-up unit may be assessed as lowered when bale growth is detected inside the compression chamber. Hence, in this example, bale growth which is normally detected in any baler can be used to assess the position of the pick-up. When bale growth is detected, it is assumed that hay is being fed to the compression chamber, hence the pick-up is considered to be lowered.

Please note that one of the data acquired at the tractor or the bale chamber, or both of said data can be used to assess the position of the pick-up unit.

According to another aspect it may be provided that the bale growth is detected to make sure crop feeding is still in progress, however, the detection of bale growth is not used directly for assessing the position of the pick-up unit. in particular in this example, when bale growth is detected, the rotational speed of the PTO shaft is reduced. Therefore, the bale growth detection can be used for assessing the raised position of the pick-up (and consequently decreasing the rotational speed of the PTO shaft) or directly for reducing the rotational speed pf the PTO shaft, skipping the step of assessing the position of the pick-up unit.

In one example, said bidirectional data exchange is carried out through a tractor implement management system.

Tractor implement management (TIM) systems are known in this field.

Basically, TIM system is electrically connected with a number of sensors of the implement (for example baler) and is designed to allow bi-directional exchange of control data between the tractor and the implement. TIM system allows to act on electro-mechanical unities of the tractor and controlling tractor functions such as tractor speed, start and stop of the tractor and steering of the tractor based on signals provided by the implement (baler).

TIM system is an ISOBUS-based protocol which allows to manage the communication between the tractor and the implement (baler), where the implement can control certain tractor functions. Basically, an electronic control unit (ECU) of the baler communicates with the tractor according to the TIM message protocol.

It is to be mentioned that ISOBUS automation can also be done without TIM system. The TIM system according to the present description is an example of an ISOBUS communication.

Therefore, TIM control unit of the baler establishes bidirectional exchange of control data between the baler and the tractor.

In one example, the rotational speed of the PTO shaft is reduced according to a preset speed value. The preset speed value may be input by the user through an interface.

In one example, the method includes a step of detecting the amount of moisture inside the compression chamber.

The method may further include a step of reducing the rotational speed of the PTO shaft speed in dependence of the detected moisture.

The rotational speed of the PTO shaft may be reduced according to a preset speed value.

According to one example, the method comprises a step of memorizing a plurality of reference values for said preset speed value and corresponding values of detected moisture.

Moreover, the method may comprise a step of reducing the rotational speed of the PTO shaft speed in dependence of the detected moisture and the corresponding reference value for said preset speed value.

Hence, it is possible to adjust the rotational speed of the PTO shaft according to the present moisture.

In one example, the baler or the tractor is provided with an auto steering system. The auto steering system has a centred mode, in which the baler is automatically steered in a straight line along the crop windrow to be picked up by the pick-up unit. the auto steering system also has a off-centre mode in which the baler is automatically steered in a sinusoidal path along the crop windrow to be picked up by the pick-up unit, whereby to form a bale in the compression chamber of a substantially uniform diameter.

In one example, if the position of the pick-up unit is assessed as raised, the auto centred mode is activated. Therefore, when it is verified that no crop feeding is taking place, the centred movement of the baler is chosen, since no bale is being formed and the off-center mode is no longer necessary.

In particular, With the assumption that when no crop is being picked-up as the pick-up is assessed to be raised, the operator might make a (headland) turn. Having the baler centered behind the tractor will less likely cause the drawbar (attaching the tractor to the baler) to come into collision with the tractor rear wheels or mudguards.

In one example, when the position of the pick-up unit is assessed as raised, an icon representative of the pick-up unit in the raised position is shown on a user interface.

Please note that the method according to the aspect of the description which is described above can be applied also to self-propelled balers which are not driven by a PTO shaft of the tractor. Self-propelled balers are, at least partially, driven by an engine (for example an internal combustion engine) and/or by an electric motor. In this case, when the position of the pick-up unit is assessed to be raised, instead of reduction of the rotational speed of the PTO shaft, the power transmitted to internal parts of the baler, for example through the motor, is regulated.

Therefore, in case of a self-propelled baler, all steps which are defined in the present application are applicable. As mentioned earlier, in this case, instead of acting on the rotational speed of the PTO shaft (which no longer exists in self-propelled balers), the power transmitted to internal parts of the baler is directly regulated. The compression chamber has a plurality of rotating guide rollers which delimit the compression chamber, and in one example, when the pick-up unit is assessed to be raised, the power which is transmitted from a power source to internal parts of the baler in order for them to operate is regulated, such that a rotational speed of the rotational guide rollers is reduced.

According to another aspect of the present description, the present invention provides a method for assessing whether the pick-up unit is in the raised position. Please note that the raised position has the same definition at what is described above. According to this aspect the control unit of the baler receives position data representative of the raised position of the pick-up unit and assesses whether the pick-up unit is in the raised position based on said position data. As explained above, said position data is acquired at the tractor or at the compression chamber.

Hence, according to this aspect the control unit of the baler assesses the position of the pick-up unit according to one or more of the aspects of the description, as described above, independently from the aspect regarding the reduction of the rotational speed of the PTO shaft. Therefore, all examples which are described above, in regard to the assessment of the position of pick-up unit are combinable also with this aspect (for example the data which the control unit of the baler uses to assess if the pick-up unit is in the raised position). This aspect applies to both towable and self-propelled balers.

According to another aspect of the present description, the present invention provides an agriculture system. The agricultural comprises a baler. The baler has a pick-up unit for picking up hay from the ground. The pick-up unit is movable between a lowered position, where the pick-up unit picks up hay from the ground, and a raised position, where the pick-up unit is spaced apart from the ground and no longer picks up the hay. The baler further has a control unit. The baler includes a compression chamber that receives the hay from the pick-up unit, with the pick-up unit being in the lowered position.

The agricultural system includes a tractor. The tractor is configured to tow the baler. The tractor has a power take-off (PTO) shaft to transfer power to the baler. The tractor includes a control unit. A bidirectional exchange of control data between the control unit of the baler and the control unit of the tractor is established.

The control unit of the baler is programmed to assess whether the pick-up unit is in the raised position. The control unit of the tractor is programmed to reduce the rotational speed of the PTO shaft in response to the raised position of the pick-up unit being assessed.

According to another aspect of the present description, the present invention provides a baler for forming round bales of crops. The baler comprises a pick-up unit for picking up hay from the ground. The pick-up unit is movable between a lowered position, where the pick-up unit picks up hay from the ground, and a raised position, where the pick-up unit is spaced apart from the ground and no longer picks up the hay.

The baler includes a compression chamber that receives the hay from the pick-up unit, with the pick-up unit being in the lowered position.

The baler has a control unit. the control unit of the baler is programmed to assess whether the pick-up unit is in the raised position. The control unit of the baler is further programmed to, in response to the position of the pick-up unit being assessed as raised, generate a command for regulating a mechanical power which is transmitted from a power take-off to internal parts of the baler in order for them to operate.

According to a further aspect of the present description, the present invention provides a computer implemented program including instructions configured to perform the steps of the method according to one or more aspects of the present description when run on the control unit of the baler according to one or more aspects of the present description.

This and other features of the invention will become more apparent from the following detailed description of a preferred, non-limiting example embodiment of it, with reference to the accompanying drawings, in which:

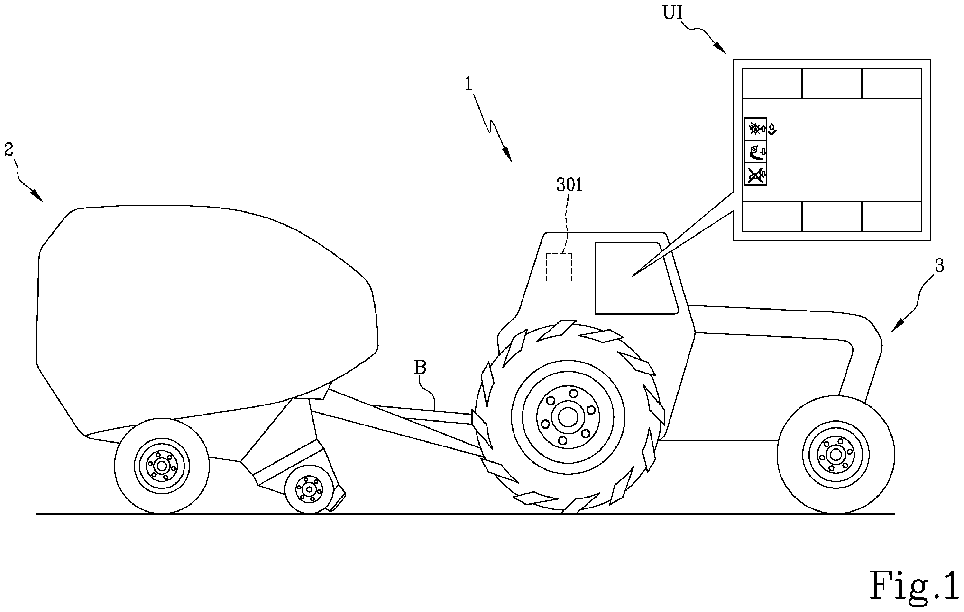

- figure 1 illustrates an agricultural system according to one or more aspects of the present disclosure;

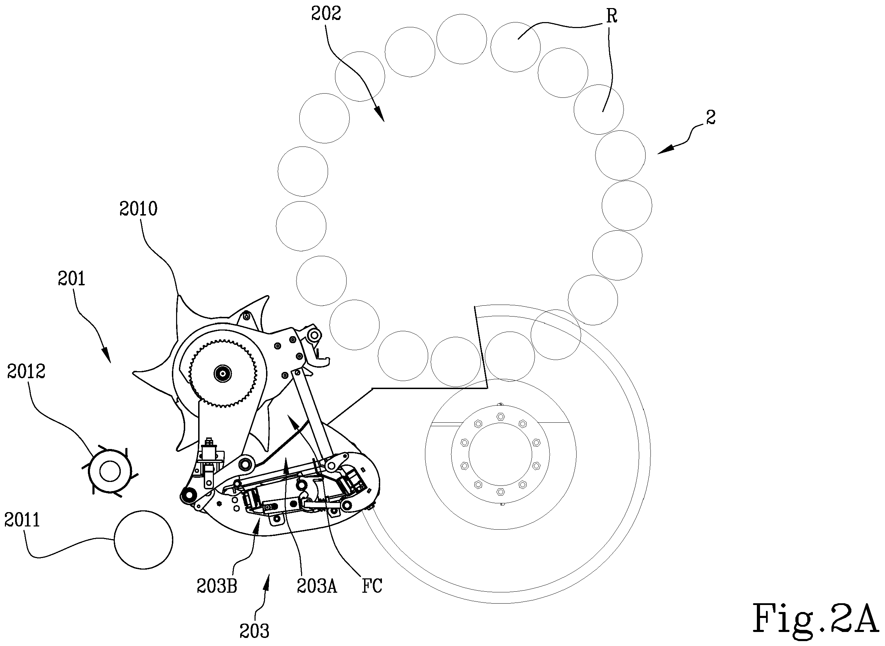

- figure 2A illustrates the agricultural machine, where the baler is of the fixed diameter chamber, in a working configuration;

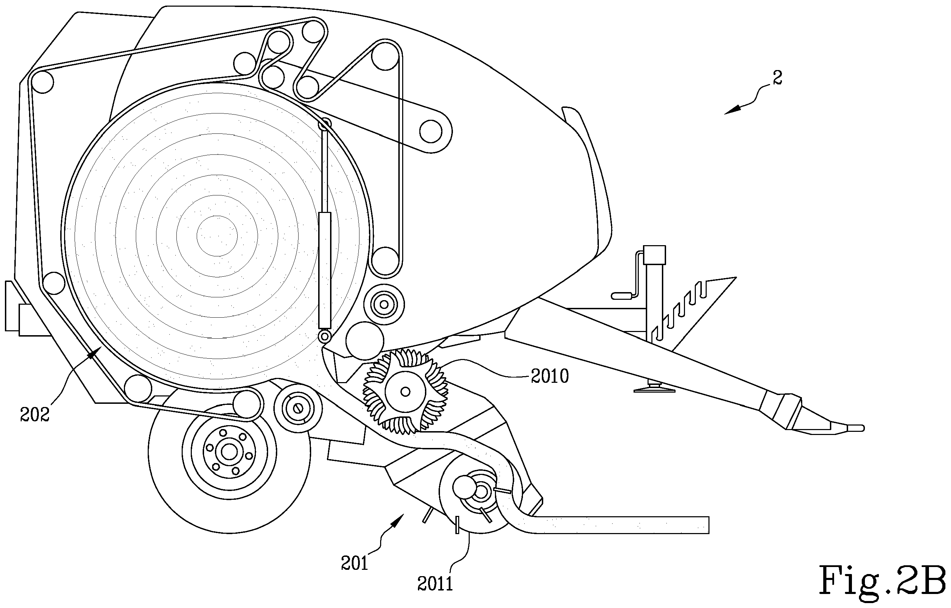

- figure 2B illustrates the agricultural machine, where the baler is of the variable diameter chamber, in a working configuration, with the formed bale inside the chamber;
- figure 3 illustrates a user interface of the tractor.
- figure 4 illustrates a hydraulic circuit for actuating the pick-up unit.

With reference to the accompanying drawings, the numeral 1 denotes an agricultural system, according to the present disclosure. The Agricultural system includes a baler 2. The baler 2 comprises a frame. The frame provides an internal volume. The baler 2 also includes a pick-up unit 201. The baler 2 includes a compression chamber 202. The pick-up unit 201 is configured for picking up hay from the ground and for feeding it into the compression chamber 202. The pick-up unit has an inlet. The pick-up unit has an outlet. The inlet faces the ground. The outlet of the pick-up unit is inside the baler 2. The outlet faces the internal volume. The compression chamber is configured for compressing the hay to form the bale. In an example compression chamber may be of a variable diameter. In this example, in the compression chamber 202, the bale forming zone increases in size as the bale is formed within the chamber. The hay is fed to the compression chamber 202 from the outlet of the pick-up unit 201 in a feeding direction. The baler 2 comprises a plurality of guide rollers R. The plurality of guide rollers is placed inside the internal volume. The baler 2 also includes a plurality of belts. The belts of the plurality of belts are placed side by side in the internal volume. The belts of the plurality of belts are wound around the guide rollers so to define an endless loop. The loop is deformable for delimiting the compression chamber. Moreover, the guide rollers are rotatable for driving the belts around the loop. In particular each part of the plurality of belts is stretched between two consecutive rollers.

Therefore, the plurality of belts encircles the circumference of the bale which is formed inside the compression chamber. In particular the belts are deformed as the bale is being formed inside the compression chamber 202. therefore, the belts conform to the shape of the bale formed in the compression chamber.

The pick-up unit 201 includes a feeding drum 2011. The feeding drum collects the hay from the ground. In an example, the feeding drum 2011 is configured to rotate in a direction opposite to the direction of travel of the baler for sweeping the hay upwardly. The feeding drum has a plurality of tines on which project from the feeding drum for sweeping the hay.

The pick-up unit may include a windguard drum 2012, placed above the feeding drum and between to windguard arms. The windguard drum may be rotatable.

The pick-up unit also includes a rotor 2010. The rotor 2010 is placed downstream of the feeding drum 2011. The rotor feeds the hay picked-up from the ground to the compression chamber of the baler. The rotor includes feeding blades. The baler 2 includes a feeding channel FC The feeding channel FC extends between an inlet and an outlet. The inlet faces the feeding drum 2011. The outlet defines an opening in the compression chamber 202. Usually in case of a plug intake at the pick-up unit of a baler excessive picked-up crop is accumulated in the feeding channel.

The baler 2 includes a drop floor 203. The drop floor is located downstream of the pick-up unit and movable between a lowered position and a raised position. The drop-floor 203, defines a (portion of) a bottom side of the feeding channel FC. The drop-floor 203 is positioned between the inlet and the outlet of the feeding channel. The excessive crop can be accumulated anywhere below or above the drop floor.

The drop floor 203 includes an upper structure 203A and a lower structure 203B. The upper structure faces the feeding channel FC. The upper structure provides apertures (or slots). The lower structure 203B is located below the upper structure.

The baler 2 may include a plurality of knives, for cutting the crops advancing through the feeding channel FC. The plurality of knives project into the feeding channel from the drop-floor. The plurality of knives is movable between an active position where the knives project into the feeding channel and a retracted position where the knives are retracted.

The plurality of knives is mounted on the lower structure of the drop-floor. The plurality of knives passes through the apertures of the upper structure to project into the feeding channel. In an example, the lower structure is movable between the raised position and the lowered position. In the raised position the plurality of knives engages the upper structure to project into the feeding channel through the apertures of the upper structure to cut the crops, and in the lowered position the plurality of knives is disengaged and spaced apart from the upper structure. In particular, the lower structure is pivotable about a pivoting axis between the raised and the lowered position. The agricultural system 1 includes a tractor 3. The tractor 3 is configured to tow the baler 2. The tractor has a power take-off (PTO) shaft to transfer power to the baler. In particular, the power is transmitted from the PTO shaft of the tractor to a drive line of the baler, which transmits the power to different devices of the baler, including the rotor shaft and the feeding drum shaft to enables their rotation.

PTO shaft is the shaft that comes supplied along with the machine and is of constant velocity type, and can be equipped either with a shear bolt or a cam type torque limiter. The PTO shaft equipped with a cam type torque limiter automatically disengages the movement in the event of a machine jam and/or blockage. The PTO shaft equipped with shear bolt automatically shears the bolt and interrupts.

The tractor includes a control unit that establishes bidirectional exchange of control data between the baler and the tractor. The TIM control unit is electrically connected to the tractor and to the baler through respective buses B and is programmed for acting on electro-mechanical unities of the tractor and for controlling tractor functions based on signals provided by the baler 2 includes a control unit. The control unit is programmed for having bidirectional exchange of control data with the control unit of the tractor 301. In one example a bidirectional exchange of control data between the control unit of the baler and the control unit of the tractor is established through TIM system. The pick-up unit 202 is movable between a lowered position, where the pick-up unit picks up hay from the ground, and a raised position, where the pick-up unit is spaced apart from the ground and no longer picks up the hay. The compression chamber receives the hay from the pick-up unit, when the pick-up unit is in the lowered position.

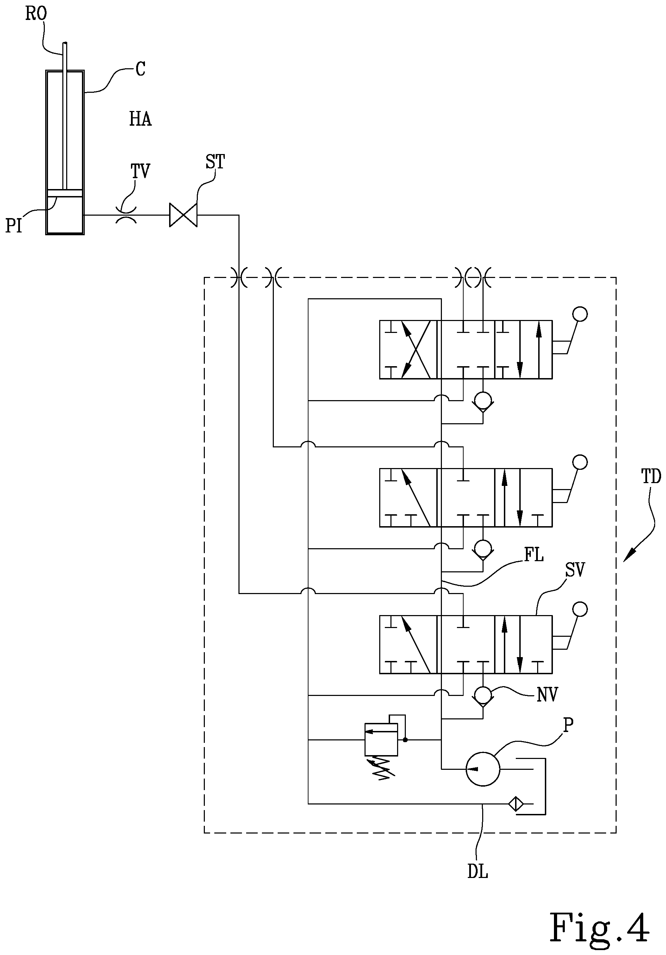

The pick-up unit is moved between the raised and the lowered position through a hydraulic actuator. With reference to figure 4 the hydraulic actuator and the hydraulic circuit for moving the pick-up unit is now described.

The tractor has a hydraulic distributor TD (marked by the dashed box). The hydraulic distributor includes a hydraulic circuit which includes an oil feed line FL which receives actuating oil from a pump P, and a dump line DL which is used to drain the actuating oil. the feed line FL provides the actuating oil from the pump to the hydraulic actuator. The hydraulic actuator is a single acting actuator. The hydraulic actuator includes a cylinder C, a piston PI placed inside the cylinder, which divides the cylinder into two chambers, and a rod attached to the piston and moves with the movement of the piston inside the cylinder. In particular the hydraulic actuator includes a plurality of cylinders, as defined above, connected to the pick-up unit to move the pick-up unit between the raised and the lowered positions. The hydraulic circuit includes a switch control valve SV which is used for directing the actuating oil towards the hydraulic cylinder and daring the oil from it. The switching control valve SV has a plurality of configurations, among which an oil feed configuration, an oil drain configuration and a float configuration. When the switch control valve is in the oil feed configuration, the valve is moved so that the oil feed line FL is connected to the line which transfers the oil to the cylinder C (through the oblique arrow in figure 4). A non-return NV valve is provided in the hydraulic circuit which allows the transfer of the oil only towards the cylinder and not in the opposite direction. Hence, in this configuration the actuating oil is fed to the hydraulic actuator and the piston, and the rod move upwards; consequently, the pick-up unit which is connected to the rod is lifted. When the piston moves upwards all the way along the full length of the cylinder C, it arrives at an end stroke of the cylinder, which defines the raised position of the pick-up unit. The hydraulic circuit may include a throttling valve TV, provided in the line which feeds the actuating oil to the cylinder. Moreover, the hydraulic cylinder may have a safety tap ST placed upstream of the throttling valve, in the direction along which the oil is fed to the actuator, to assure that the pick-up unit remains in the pick-up position when the switching valve is in the oil feed configuration, and during the movement of the baler. The safety valve is regulated manually. In the oil drain of the switching valve moves in a direction opposite to the direction along which it is moved to be in the oil flow direction and the oil which is drained from the cylinder moves towards the dump line DL (in this configuration the arrow pointing downwards connects the lien which provides oil to the actuator to the dump line. Therefore, the oil is drained from the cylinder and the piston along with the rod moves downwards (in the opposition direction along which the piston moves to be in the raised position) and consequently the pick-up unit is lowered, (due to gravity) unit the piston arrives at the second end stroke of the cylinder (opposite to the one which defines the raised position) and the pick-up unit is positioned in the lowered position. Preferably the piston moves only between the two end strokes of the cylinder, hence, the pick-up unit moves only between the lowered and the raised positioned (so no intermediate position between the lowered and the raised position is provided). However, it can be provided that the movement of the pick-up between the lowered and the raised position includes also intermediate positions. The pick-up unit has a frame and a pair of wheels connected to the frame, which are placed on the ground during the function of the pick-up unit. the powered position of the pick-up unit may be defined as the configuration in which the wheels of the pick-up unit are positioned on the ground. Moreover, the second end stroke of the cylinder is determined by the height of the wheels; hence, the distance of the frame of the pick-up unit from the ground when the wheels are positioned on the ground. Such a distance may be regulated by the operator. Therefore, in the drain configuration the piston moves downwards until the wheels are positioned on the ground. Moreover, the switching control valve SV has a float mode, in which the actuating oil can be flown back and forth in the cylinders.. The switching valve is set to the float configuration after the pick-up unit is brought to the lowered position; in such a configuration the pick-up flow may be floating. The pick-up unit is moved between the raised position and the lowered position through commands which are sent through the tractor. For example, the configuration of the switching control valve SV is regulatable through a lever placed at the tractor T. In this example, the switching control valve is in the oil flow configuration when the lever is in a first position, and the switching control valve is in the oil drain configuration when the lever is in a second position, different than the first position, and wherein the switching control valve is in the float configuration when the lever is in a float position. So, by (manually) moving the lever between said positions the operator can regulate the configuration of the switch valve SV and therefore, the position of the pick-up unit. Such commands on the position of the lever are communicated to the control unit of the baler through said bidirectional data exchange.

Please note that alternately an electric actuator can be used to move the pick-up unit.

In one example, the hydraulic circuit includes two further switching valves which are connected to the knives' actuator (to activate and deactivate the knives (if any)), and to the drop-floor actuator, to move the drop-floor between the raised and lowered position. Hence, according to an example, a 3-in-1 valve is used to direct the actuating oil from the pump P alternatively between the pick-up switching control valve SV, drop-floor and the knives (if available) actuators. Therefore, for each actuator one specific conduit can be provided through which the oil is flown. Preferably, upon choosing one of the said actuators, 100% of the oil is flown to the chosen actuator.

The control unit is programmed to estimate the position of the pick-up between said lowered and raised positions. In particular, the control unit of the baler is programmed for assessing whether the pick-up unit is in the raised position. In particular, the control unit of the baler receives position data which is representative of the position of the pick-up unit and assesses if the pick-up unit is in the raised position or in the lowered based on said position data. Preferably, the position data is acquired at the tractor or at the compression chamber. For example, the position data may include the configuration of the switching control valve SV (between said plurality of configurations). In particular the configuration of the switching valve is detected though the data relating the position of the lever communicated to the control unit of the baler. For example, when the operator moves the lever to the first position, this movement is communicated to the control unit of the baler, along with the duration for which the lever remained in that position (this represents the duration for which the oil was fed to the hydraulic cylinder in the oil feed position of the switching valve). In one example, the control unit of the baler assesses the position of the pick-up unit based on the data on the commands given to the control unit of the tractor which are communicated to the control unit of the baler (and in particular regard the position of the lever).

For example, the control unit of the baler assesses the position of the pick-up unit as raised when the lever is in the first position for 200-300 ms (preferably for 300 ms). Moreover, the position of the pick-up unit is assessed as lowered when lever is in the second position for at least 100 ms (preferably at least 300ms). The position of the pick-up unit is assessed as lowered when the lever is in the float position.

Preferably, when the baler is power cycled, the initial assessment is that the pickup is in the lowered position (to avoid false lowered assessment).

The example provided above regard the solution in which the data which the control unit utilizes for assessment of the position of the pick-up unit are received from the tractor; however, alternatively (or in combination with said solution) the position data can be obtained at the baler.

For example, the position data may include data regarding bale growth inside the compression chamber 202. In particular, when bale growth inside the compression chamber is detected, the control unit assesses the position of the pick-up unit as lowered. A sensor may be used inside the compression chamber for detecting the bale size.

In variable chambers bale growth can be detected by detecting change in form of the belts inside the compression chamber. For fixed type chambers the data obtained by a pressure sensor inside the chamber may be used for bale size.

When the raised position of the pick-up unit is assessed (according to any of the above-mentioned examples), a rotational speed of the PTO shaft is reduced. In particular, the control unit of the baler, upon assessing the raised position of the pick-up unit, generates a command for regulating a mechanical power which is transmitted from a power take-off (a power source) to internal parts of the baler in order for them to operate. In particular, for towable balers, when the pick-up is estimated to be raised, the control unit of the baler requests the reduction of rotational speed of the PTO shaft, and the control unit of the tractor reduces such speed. For self-propelled balers, when the pick-up is estimated to be raised, the control unit of the baler generates a request for reduction of the power, for example provided by an electric motor, to the internal parts of the baler (for example reduction of rotational speed of the rotational rollers R). Preferably, said bidirectional data exchange is carried out through a tractor implement management system.

The rotational speed of the PTO shaft may be reduced (upon detection of the raised position of the pick-up unit) according to a preset speed value, which may be input by the user, for example through a user interface UI. The preset speed value may be in the range 250-1000 rpm, preferably 400-900, more preferably 220-540 rpm, even more preferably 250-400 rpm or 200-300 rpm, most preferably 250-300 rpm.

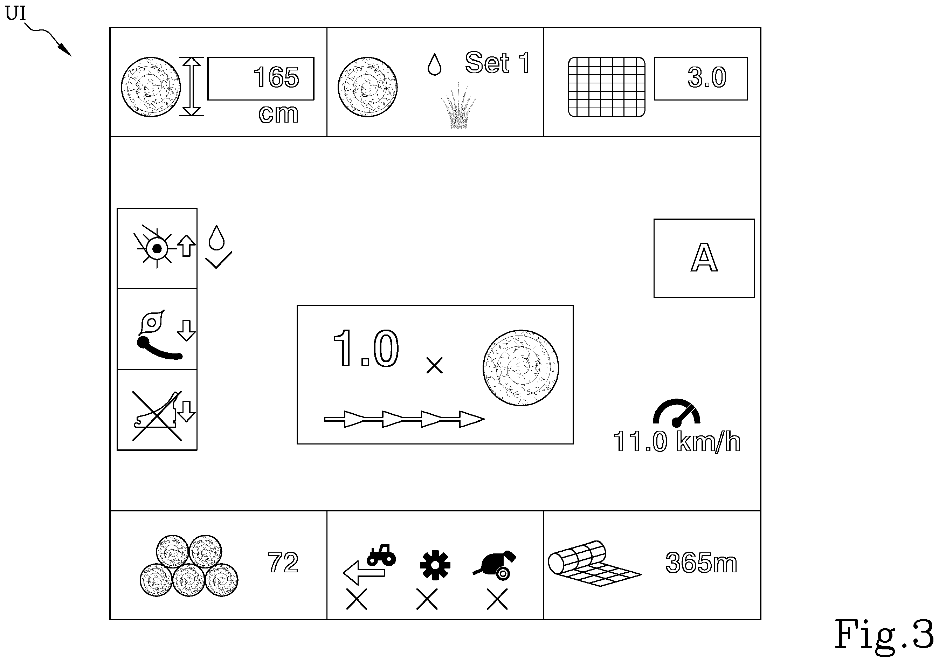

The user interface UI is positioned at the tractor 3. It is to be mentioned that the user interface displays specific icons for each of the pick-up unit, the drop-floor and knives (if available). These icons provide the operator with information of the position of the drop-floor, pick-up unit and the knives (lowered/lifted, activated/retracted) in real time. Moreover, the user interface displays to which actuator (pick-up, drop-floor, knives) the actuating oil is being flown, e.g. with a "switch" icon (for example having the shape of a drop), which is located beside the icon of the component (pick-up, drop-floor, knives) which is currently fed with oil. The user interface provides the operator with other information and settings of the agricultural system as well, for example the width of the crop to be picked up. Figure 3 illustrates the user interface and said icons. When the position of the pick-up is assessed to be raised, such information is shown on the user interface using an icon, for example an arrow pointing upwards. The user interface also shows the operator if the TIM communication is activated.

In one example, the baler includes moisture sensor(s) to detect the amount of moisture inside the compression chamber. The sensor is placed inside the compression chamber.

The rotational speed of the PTO shaft is reduced in dependence of the detected moisture.

In one example the rotational speed of the PTO shaft is reduced if the detected moisture is between 10-70%, more preferably 20-60%, most preferably 20-40% or below 40%.

The moisture sensor is according to one or more aspects described in Italian patent application 102020000001009 in the name of the same Applicant and here fully incorporated by reference into this patent application.

The baler may have a storage unit for memorizing a plurality of reference values for said preset speed value and corresponding values of detected moisture (forming a database). Therefore, when the pick-up unit is detected to be in the raised position, the rotational speed of the PTO shaft (or the power in case of self-propelled baler) is reduced according to that database, so that the speed at which the PTO shaft needs to rotate is chosen based on the detected moisture value according to the data base.

The baler 2 (or the tractor 3) is provided with an auto steering system which has a centred mode, in which the baler is automatically steered in a straight line along the crop windrow to be picked up by the pick-up unit, and a off-centre mode in which the baler is automatically steered in a sinusoidal path along the crop windrow to be picked up by the pick-up unit, whereby to form a bale in the compression chamber of a substantially uniform diameter. Preferably, when the position of the pick-up unit is assessed as raised, the auto centred mode is activated.

For the sake of completeness, a sequence diagram, as an example of how the position assessment is carried out and what comes after the assessment is provided below.

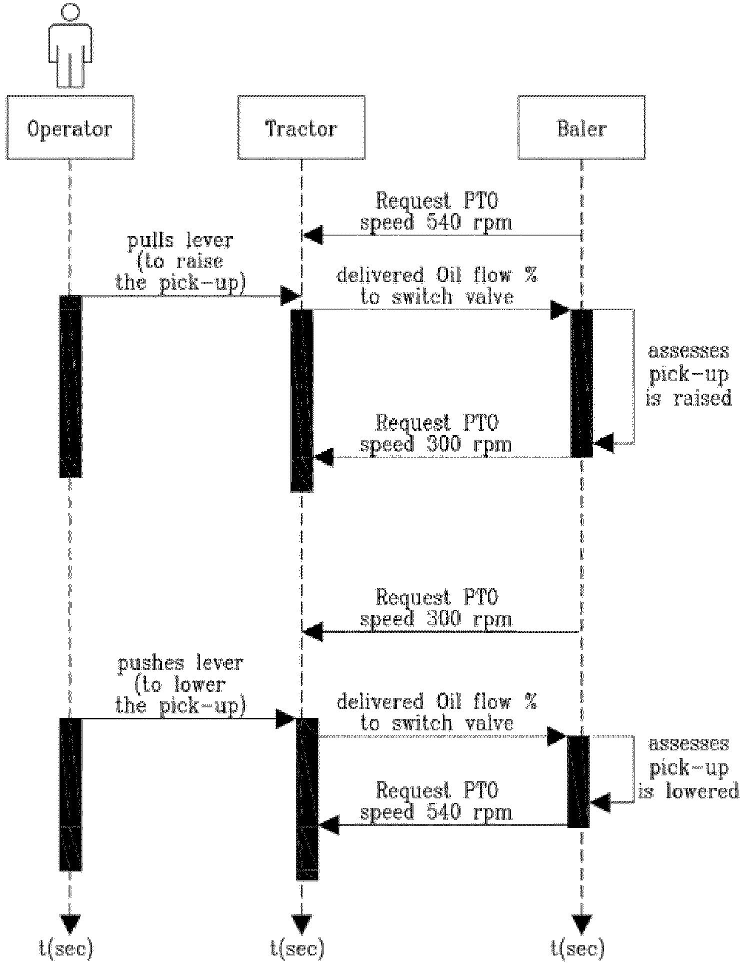

According to this diagram, the baler sends a request PTO speed of 540 rpm to the baler. The operator changes the position of the lever to the first position to change the configuration of the switching valve SV to the oil flow configuration. The duration for which the lever was pulled to be in the first position is communicated to the control unit of the baler. Upon changing the position of the lever, the configuration of the switching valve is changed accordingly. Therefore, the period of time for which the lever was pulled corresponds to the period of time for which the oil was fed to the hydraulic actuator. Based on the detected period of time on the control until, the baler determines whether the pick-up unit is in the raised position. If the detected period does not fall within the pre-determined period of time then the pick-up is assessed to be in the lowered position and the rotational speed of the PTO is not changed. However, when the pick-up unit is assessed to be in the raised position, the control unit of the baler requests the reduction of the rotational speed of the PTO shaft (for example to 300 rpm according to the example in the diagram).

## Claims

1. A method of forming a bale by a baler (2) towed by a tractor (3), the baler having a pick-up unit (201) movable between a lowered position, where the pick-up unit picks up hay from the ground and feeds it into a compression chamber (202), and a raised position, where the pick-up unit is spaced apart from the ground and no longer picks up the hay, wherein the tractor is mechanically connected to the baler and transmits mechanical power to the baler through a PTO shaft, wherein a bidirectional exchange of control data between a control unit of the baler (2) and the tractor is established, the method comprising the following steps:
- assessing whether the pick-up unit is in the raised position, by the control unit of the baler;
- if the raised position of the pick-up unit is assessed, reducing a rotational speed of the PTO shaft.

2. The method according to claim 1, comprising a step of receiving, at the control unit of the baler, position data representative of the raised position of the pick-up unit and assessing whether the pick-up unit is in the raised position based on said position data, wherein said position data is acquired at the tractor or at the compression chamber (202).

3. The method according to claim 2, wherein the position data is acquired at the tractor, and wherein the pick-up unit is moved between the raised position and the lowered position through commands which are sent through the tractor, and the baler receives at its control unit control data representative of said commands and assesses whether the pick-up unit is in the raised position based on said control data.

4. The method according to claim 3, wherein the pick-up unit is moved between the raised and the lowered position though a hydraulic actuator (HA) and a switching control valve (SV), having an oil feed configuration, where actuating oil is fed into the hydraulic actuator, and an oil drain configuration, where the actuating oil is drained from the hydraulic actuator, wherein the control data is representative of one of the oil feed and oil drain configuration of the switching valve (SW).

5. The method according to claim 4, wherein the configuration of the switching control valve (SW) is regulatable through a lever at the tractor (T), wherein the switching control valve is in the oil flow configuration when the lever is in a first position, and wherein the switching control valve is in the oil drain configuration when the lever is in a second position, different than the first position, wherein the switching control valve (SV) further has a float configuration, allowing oil to flow back and forth in the cylinders and wherein the switching control valve is in the float configuration when the lever is in a float position, and wherein one or more of the following conditions is verified:
- the position of the pick-up unit is assessed as raised when the lever is in the first position for 200-300 ms;
- the position of the pick-up unit is assessed as lowered when lever is in the second position for at least 100 ms;
- the position of the pick-up unit is assessed as lowered when the lever is in the float position.

6. The method according to claim 2, wherein the position data is acquired at the compression chamber (202) and represents the bale growth inside the compression chamber, and wherein the position of the pick-up unit (201) is assessed as lowered when bale growth is detected inside the compression chamber.

7. The method according to any of the previous claims, wherein said bidirectional data exchange is carried out through a tractor implement management system.

8. The method according to any of the previous claims, wherein the rotational speed of the PTO shaft is reduced according to a preset speed value, wherein the preset speed value is input by the user through an interface.

9. The method according to any of the previous claims, comprising the following steps:
- detecting the amount of moisture inside the compression chamber;
- reducing the rotational speed of the PTO shaft in dependence of the detected moisture.

10. The method according to claim 9, wherein the rotational speed of the PTO shaft is reduced according to a preset speed value, the method comprising the following steps:
- memorizing a plurality of reference values for said preset speed value and corresponding values of detected moisture;
- reducing the rotational speed of the PTO shaft in dependence of the detected moisture and the corresponding reference value for said preset speed value.

11. The method according to any of the previous claims, wherein the baler (2) or the tractor (3) is provided with an auto steering system having a centered mode, in which the baler is automatically steered in a straight line along the crop windrow to be picked up by the pick-up unit, and a off-centre mode in which the baler is automatically steered in a sinusoidal path along the crop windrow to be picked up by the pick-up unit, whereby to form a bale in the compression chamber of a substantially uniform diameter,
wherein, if the position of the pick-up unit is assessed as raised, the auto centred mode is activated.

12. The method according to any of the previous claims, wherein when the position of the pick-up unit (201) is assessed as raised, an icon representative of the pick-up unit in the raised position is shown on a user interface.

13. An agriculture system (1) comprising:
- a baler (2) having a pick-up unit (201) for picking up hay from the ground, the pick-up unit being movable between a lowered position, where the pick-up unit picks up hay from the ground, and a raised position, where the pick-up unit is spaced apart from the ground and no longer picks up the hay, the baler further having a control unit;
- a compression chamber (202) that receives the hay from the pick-up unit, with the pick-up unit being in the lowered position;
- a tractor (3), configured to tow the baler, the tractor having a power take-off (PTO) shaft to transfer power to the baler and a control unit, wherein a bidirectional exchange of control data between the control unit of the baler and the control unit of the tractor is established;
wherein the control unit of the baler is programmed to assess whether the pick-up unit is in the raised position,
Wherein the control unit of the tractor is programmed to reduce the rotational speed of the PTO shaft in response to the raised position of the pick-up unit being assessed.

14. A baler (2) for forming round bales of crops, comprising:
- a pick-up unit (201) for picking up hay from the ground, the pick-up unit being movable between a lowered position, where the pick-up unit picks up hay from the ground, and a raised position, where the pick-up unit is spaced apart from the ground and no longer picks up the hay;
- a compression chamber (202) that receives the hay from the pick-up unit, with the pick-up unit being in the lowered position,
- a control unit programmed to:
assess whether the pick-up unit is in the raised position,
in response to the position of the pick-up unit being assessed as raised, generate a command for regulating a mechanical power which is transmitted from a power take-off to internal parts of the baler in order for them to operate.

15. A computer implemented program including instructions configured to perform the steps of claims 1 to 12 when run on the TIM control unit of the baler of claim 14.
